# EUROPEAN PATENT APPLICATION

(11) **EP 2 001 000 A2**
(43) Date of publication of application: **10.12.2008**
(21) Application number: 08251815.0
(22) Date of filing: 23.05.2008
(51) Int. Cl.: G08C 23/04

(54) **Utility outlets as remote control repeaters**

(30) Priority: 24.05.2007 US 940015 P
(71) Applicant: Optimal Innovations Inc, Bridgetown (BB)
(72) Inventor: Schoettle, Roland, Freeport, Grand Bahama Island (BS)
(74) Representative: Jackson, Richard Eric

(57) **Abstract**

The current invention is directed to using utility outlets as remote control repeaters. Using utility outlets as remote control repeaters extends the coverage distance of the remote controller. Additionally, using the utility outlets as repeaters avoids interferences such as walls in premises.

## Description

### CROSS-REFERENCE TO RELATED APPLICATIONS

This application claims priority from U.S. Provisional Patent Application No. 60/940,015, filed May 24, 2007, the disclosure of which is hereby incorporated herein by reference. The present application is also related to co-pending, and commonly assigned U.S. Patent Application No. 10/094,743, entitled "HYBRID FIBER/CONDUCTOR INTEGRATED COMMUNICATION NETWORKS;" U.S. Patent Application No. 11/512,742, entitled "HYBRID FIBER/CONDUCTOR INTEGRATED COMMUNICATION NETWORKS;" U.S. Patent Application No. 11/683,304, entitled "SYSTEMS AND METHODS FOR LINKING UTILITY CONTROL DEVICES;" U.S. Patent Application No. 11/683,327, entitled "SYSTEM AND METHOD FOR INFRASTRUCTURE REPORTING;" U.S. Patent Application No. 11/683,298, entitled "LIGHT SWITCH USED AS A COMMUNICATION DEVICE;" U.S. Patent Application No. 11/683,308, entitled "SYSTEM AND METHOD FOR PREMISES MONITORING USING WEIGHT DETECTION;" U.S. Patent Application No. 11/123,176, entitled "SELF LEARNING AUTOMATION SYSTEM;" U.S. Patent Application No. 11/683,326, entitled "ANTICIPATORY UTILITY CONTROL DEVICE;" U.S. Patent Application No. 11/923,176, entitled "ANOMALY-BASED PREMISE CONTROL;" U.S. Patent Application No. 11/683,335, entitled "PLUG AND PLAY UTILITY CONTROL MODULES;" and U.S. Patent Application No. 11/683,354, entitled "LIGHT SWITCH POWER SUPPLY;" U.S. Patent Application No. XX/XXX,XXX, Attorney Docket No. 66816/P026US/10704960, entitled "UTILITY OUTLETS AS A SECURITY SYSTEM;" U.S. Patent Application No. 60/940,010, entitled "LIGHT SWITCH AS A WIRELESS HUB;" U.S. Patent Application No. XX/XXX,XXX, Attorney Docket No. 66816/P029US/10704963, entitled "TEMPERATURE DETECTION AND CALCULATIONS UTILITY OUTLETS;" U.S. Patent Application No. XX/XXX.XXX, Attorney Docket No. 66816/P030US/10704964, entitled "USING UTILITY OUTLETS TO DETERMINE AND REPORT MEDIA BASED ACTIVITY," the disclosures of which are hereby incorporated herein by reference.

### TECHNICAL FIELD

The current invention relates to utility outlets and specifically to the use of utility outlets as repeaters for remote control signals.

### BACKGROUND OF THE INVENTION

Today, a remote controller can control most devices used in premises. Most of these remote controllers emit infrared signals or radio waves to control the target device. Typically, however, the remote controller has to be in close proximity to the device being controlled or at least be able to "see" the device being controlled i.e. there are no objects in the transmission space between the remote controller and the device being controlled. Consequently, typical remote controllers become ineffective when the device to be controlled is in a different room, from the room in which the user with a remote controller is located.

### BRIEF SUMMARY OF THE INVENTION

The present invention is directed to devices, systems and methods of improving the effectiveness of the use of remote controllers in premises in situations where the remote controller is not in proximity to the device being controlled. The present invention takes advantage of utility outlets that are present in most premises rather than using devices with the sole function of operating as a repeater. The use of utility outlets takes advantage of the fact that utility outlets are invariably installed in every room of premises. Further, the utility outlets are connected within the premises by a wire network that serves to deliver power to the premises, and the wire network then can also serve as a conduit for the transmission of signals from one utility outlet to the other. The use of utility outlets, therefore, obviates the cost and the inconvenience of having several stand-alone repeaters plugged into power sockets within premises.

In embodiments of the current invention, the utility outlet in proximity to the remote controller functions as a receiver of control signals from a remote controller. Other utility outlets may function as a repeater of a remote control signal by sending received signals from one utility outlet to another by the electrical wiring network of the premises. The utility outlet in proximity to the device to be controlled, upon receiving a signal from another utility outlet, transmits a control signal to the device to be controlled. Because the signals are transmitted from utility outlet to utility outlet by wire, the problems of too much distance from the remote controller to the device and interferences between the remote controller and the device are avoided.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURES 1 AND 2 illustrate a utility outlet as one embodiment of the current invention;

FIGURE 3 illustrates a plurality of utility outlets being used to remotely control devices; and

FIGURE 4 is a flow diagram illustrating one embodiment of a process involved in using utility outlets as remote control repeaters to control a device.

### DETAILED DESCRIPTION OF THE INVENTION

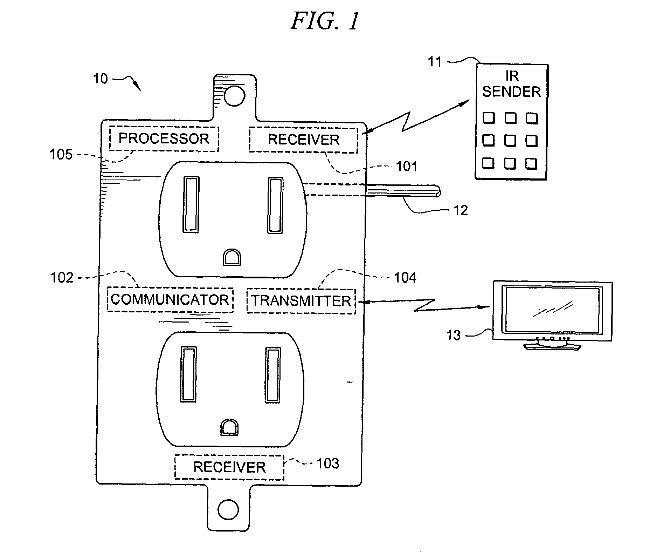

FIGURE 1 illustrates one embodiment 10 of the current invention. Utility outlet 10 is a power socket used in a premise to allow devices to connect to electrical power. In addition to connecting devices to electrical power, utility outlet 10 also includes receiver 101 for detecting control signals from a remote control device, for example, infrared (IR) sender 11. Utility outlet 10 also includes communicator 102 for sending a peer-to-peer signal via wire to another utility outlet. Peer-to-peer, in the current application, means a signal from one utility outlet to another and is transmitted, preferably, by the electrical wire network in the premises, such as wire 12. However, the peer-to-peer signal could also be transmitted wirelessly or by a wire separate from wire 12 connected to terminals (not shown) on device 10.

Utility outlet 10 may also be capable of receiving a peer-to-peer signal from another utility outlet via receiver 103 (which could be, if desired, combined with receiver 101). In response to the receipt of the remote control signal, receiver 103 communicates with remote control transmitter 104. Remote control transmitter 104, in response to the communication from receiver 103, sends a remote control signal to a device, such as device 13, to be controlled. To determine whether to send a signal to another utility outlet or to send a remote control signal to a device to be controlled, utility outlet 10 may be equipped with a processor such as processor 105. Processor 105 is capable, if desired, of allowing a user to preprogram utility outlet 10 to determine whether a received peer-to-peer signal should be retransmitted to another utility outlet or should be converted to a remote control signal that is transmitted to a device in proximity to the utility outlet. Similarly, where utility outlet 10 receives a remote control signal from a remote controller, processor 105 determines whether a peer-to-peer signal should be transmitted in response to the remote control signal or whether nothing should be done. Processor 105 determines whether and which signal is to be transmitted based on user preprogramming of remote control signal codes of the remotely controlled devices in the presence of the utility outlet.

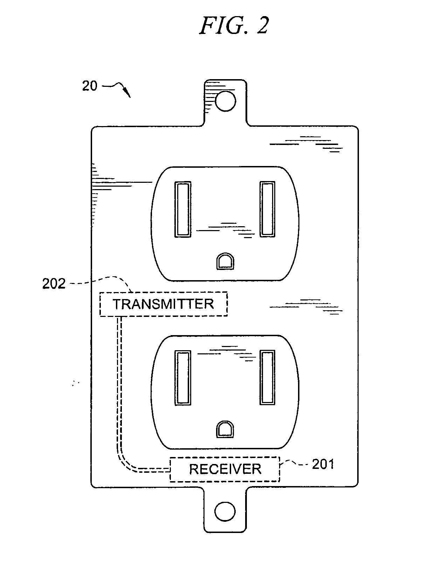

FIGURE 2 illustrates utility outlet 20 where the utility outlet 20 is an electrical socket. In this example, the utility outlet 20 has receiver 201 to receive a peer-to-peer signal and transmitter 202 to transmit received peer-to-peer signals to another utility outlet. In this example, utility outlet 20 functions as a repeater of peer-to-peer signals and does not receive or emit remote control signals from or to local devices. Note that while the utility devices shown are power sockets, any utility device, such as a switch, light fixture, or socket can be used.

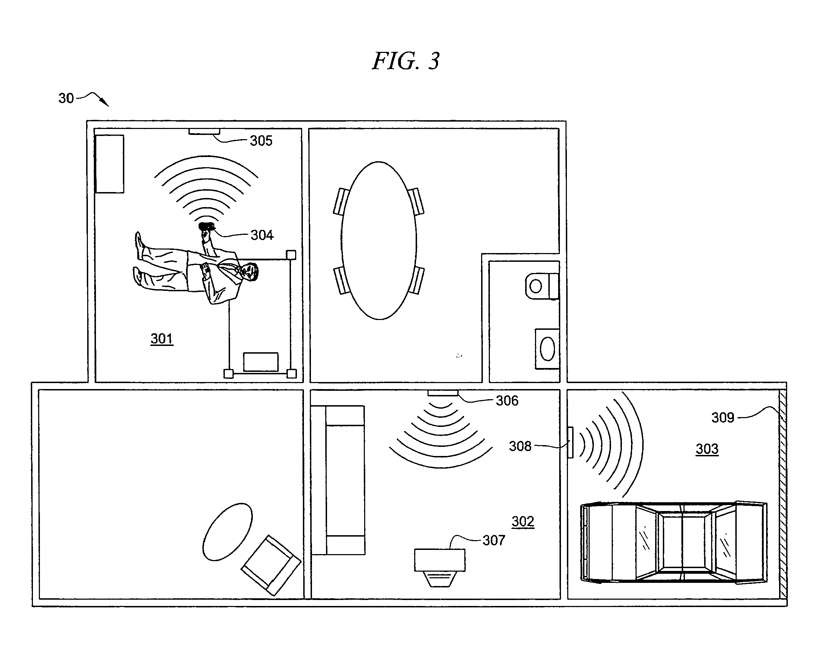

FIGURE 3 illustrates an example of how a plurality of utility outlets may be used as repeater stations to remotely control a premises' devices. Building 30 has several rooms, including bedroom 301, family room 302 and garage 303. Television (TV) 307 is controllable by a remote controller. Even though TV 307 is capable of responding to a remote control signal from a remote controller, such as from device 304, a user in bedroom 301 may not be able to control TV 307 from bedroom 301 directly from the hand-held device. The inability of device 304 to control TV 307 may be due to the distance from bedroom 301 to family room 302 or because of the walls within building 30 preventing signals, such as IR signals, from device 304 in bedroom 301 from reaching TV 307 in family room 302.

In this example the invention solves the problem of not being able to control TV 307 from bedroom 301 by allowing utility outlet 305 in bedroom 301 to receive the signal from remote controller 304. Utility outlet 305 then transmits a signal over the premises' wiring to utility outlet 306 inside room 302. In response to the signal received from utility outlet 305, utility outlet 306, being in proximity to TV 307, sends a remote control signal, IR or otherwise, to control TV 307. This obviates the need for the user to enter family room 302 to remotely control TV 307.

In another example depicted in FIGURE 3, the user may want to close garage door 309 without having to leave bedroom 301. In this example, the bedroom is far from the garage and there are intervening walls preventing a signal from remote control 304 from directly controlling the garage door. The current invention allows the user to close the garage door by a series of utility outlets operating as either a signal receiver, signal repeater, or signal transmitter, or a combination thereof.

In this example, from bedroom 301, user 304 sends a remote signal with the appropriate code to control garage door 309. Utility outlet 305 detects this code and determines that it does not control a device in room 301. Device 305 then sends a peer-to-peer signal to utility outlet 306. Utility outlet 306 receives this peer-to-peer signal, detects that the control of a device in room 302 is not intended and transmits another peer-to-peer signal to utility outlet 308. Utility outlet 308 receives the peer-to-peer signal, detects that it is for controlling garage door 309 and converts it to a remote control signal with a code to control the closing of garage door 309. Note that a look-up table (not shown) in device 305 (or in a device accessible by device 305) could have been used to route the control signal instead of relaying the signal through device 306.

It should be noted that any household device or personal device on the premise may be controlled by this invention. For example, a user may wish, from his or her bedroom to send a signal to open a garage door and then send another signal to start the car to warm up.

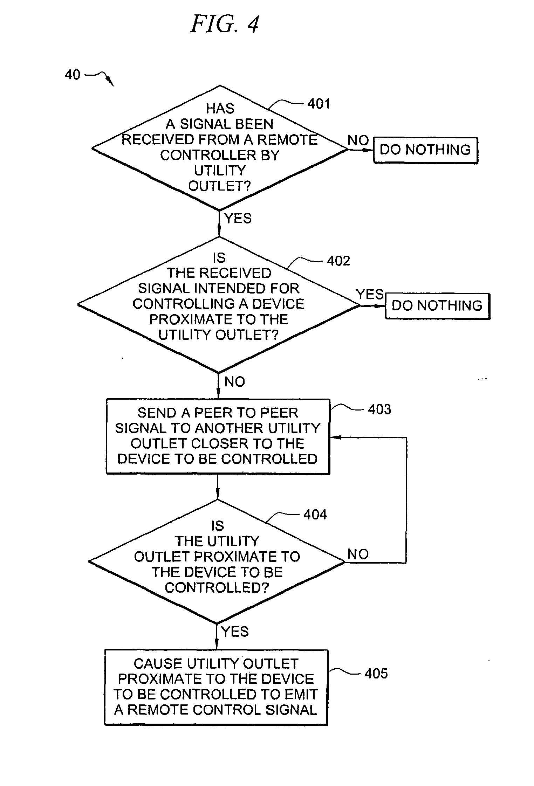

FIGURE 4 shows flow diagram 40 illustrating the processes involved in one example of the invention. This example begins with process 401 where the utility outlet determines whether a signal has been received from a remote controller. When a signal has been received from a remote controller, process 402 running, for example, in a utility device local to where the signal is sent from, determines if the received signal is intended for controlling a device in the proximity of the remote controller. If the received signal is for controlling a device in the proximity of the receiving utility outlet, then the utility outlet does nothing. If the received signal is for controlling a device not in the proximity of said utility outlet, process 403 sends a signal to another utility outlet.

Process 404 determines whether the utility outlet receiving the signal from the sending outlet is in proximity to the device to be controlled. If the receiving utility outlet is not in proximity with the device to be controlled then the process of peer-to-peer signals will be repeated until a receiving utility outlet is in proximity to the device to be controlled. If process 404 determines that the receiving utility outlet is in proximity to the device to be controlled then this example concludes when process 405 emits a remote control signal to control the device.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A utility outlet for use within a premises, said utility outlet comprising:
means for connecting devices to said premises' electrical power;
means for receiving a remote control signal from a sending device local to said utility outlet; and
means for repeating received ones of said control signals.

2. The utility outlet of claim 1 wherein said utility outlet is one of the group consisting of:
a power socket, an electrical switch, a permanently mounted light socket.

3. The utility outlet of claim 1 wherein said repeating is via said premises' electrical power wiring.

4. The utility outlet of claim 3 further comprising:
means for determining whether said repeated signal should be sent to a utility outlet remote a receiving outlet in response to said received remote control signal.

5. The utility outlet of claim 1 further comprising:
means for sending a remote control signal to a device local to said receiving outlet in response to received ones of said control signals.

6. A method of using utility outlets within a premises as remote control repeaters, said method comprising:
receiving, at one of said utility outlets, a first remote control signal from a remote control device, wherein said utility outlets are capable of connecting devices to said premise's electrical power; and
transmitting a peer-to-peer signal from said one of said utility outlets to another of said utility outlets so as to control a device in a location remote from the location of said remote control device.

7. The method of claim 6 wherein each of said utility outlets is selected from the group consisting of:
a power socket, an electrical switch, a permanently mounted light socket.

8. The method of claim 6 wherein said control of said remotely located device is from a utility outlet in proximity to said remote device, said method further comprising:
causing said utility outlet in proximity to said device to transmit a second remote control signal to said remote device in response to receipt of a peer-to-peer signal.

9. The method of claim 8 wherein said second remote control signal contains the same codes as contained in said first remote control signal.

10. A system of using utility outlets in a premise as remote control repeaters, said system comprising:
a plurality of utility outlets wherein each of said utility outlets comprises:
means for connecting devices to said premise's electrical power; and
means for communicating with other utility outlets.

11. The system of claim 10 wherein each of said utility outlets is one of the group consisting of:
a power socket, an electrical switch, a permanently mounted light socket.

12. The system of claim 10 wherein at least one of said plurality of utility outlets comprises:
means for receiving a remote control signal from a remote control device located in proximity to said at least one utility outlet.

13. The system of claim 12 wherein said utility outlet receiving said remote control signal further comprises:
means for identifying a code of said received remote control signal, and determining, based, at least in part on said identifying code, whether a peer-to-peer signal should be sent in response to said received remote control signal.

14. The system of claim 10 wherein at least one of said plurality of utility outlets comprises:
means for sending a remote control signal to said other outlets based upon a received control signal.

15. A utility outlet for use within a premise, said utility outlet comprising:
terminals for connecting said utility outlet to said premise's electrical power;
a receiver for receiving a remote control signal from a sending device; and
a communicator communicably connected to said receiver and operable for sending peer-to-peer signals.

16. The utility outlet of claim 15 wherein said utility outlet is one of a group consisting of:
a power socket, an electrical switch, a permanently mounted light socket.

17. The utility outlet of claim 15 wherein said communicator is capable of sending signals via said premise's electrical power wiring.

18. The utility outlet of claim 15 further comprising:
a processor.

19. The utility outlet of claim 15 further comprising:
a receiver for receiving peer-to-peer signals.

20. The utility outlet of claim 15 further comprising:
a transmitter for sending a remote control signal.

21. A utility device for use within a premise, said utility device comprising:
a receiver for receiving peer-to-peer signals; and
a transmitter for transmitting received ones of said peer-to-peer signals to another utility outlet.

22. The utility device of claim 21 wherein said utility device is one of the group consisting of:
a power socket, a light switch, a permanently mounted light socket.
